# EUROPÄISCHE PATENTSCHRIFT

(11) **EP 3 271 223 B1**
(45) Veröffentlichungstag und Bekanntmachung des Hinweises auf die Patenterteilung: **17.07.2024**
(21) Anmeldenummer: 16710149.2
(22) Anmeldetag: 14.03.2016
(51) Int. Cl.: B60T 8/36

(54) **BETÄTIGUNGSVORRICHTUNG FÜR EINE KRAFTFAHRZEUGBREMSE**
ACTUATING DEVICE FOR A MOTOR VEHICLE BRAKE
DISPOSITIF D'ACTIONNEMENT POUR FREIN DE VÉHICULE À MOTEUR

(30) Priorität: 20.03.2015 DE 102015104246
(43) Veröffentlichungstag der Anmeldung: 24.01.2018
(73) Patentinhaber: IPGate AG, 8808 Pfäffikon (CH)
(72) Erfinder: LEIBER, Heinz, 71739 Oberriexingen (DE); LEIBER, Thomas, 81675 München (DE); WINZER, Rainer, 81925 München (DE)
(74) Vertreter: Meissner Bolte Partnerschaft mbB
(86) Internationale Anmeldenummer: PCT/EP2016/055471
(87) Internationale Veröffentlichungsnummer: WO 2016/150746

(56) Entgegenhaltungen:
- WO-A1-02/47947
- DE-A1- 102011 017 436
- DE-A1- 102011 050 869
- DE-A1- 102012 213 216
- DE-A1- 102013 202 350

## Beschreibung

Die vorliegende Erfindung betrifft eine Betätigungsvorrichtung für eine Kraftfahrzeugbremse.

### Stand der Technik

Der Einbau von Aggregaten, insbesondere im Motorraum, steht in Anbetracht der vielen neuen Systeme der Automobilbauer (OEM) vor immer größeren Problemen wegen der knappen Einbauräume. Teilweise wird zum Beispiel das ABS/ESP-Einheit, überwiegend bei Fronttrieb und Quermotor, hinter dem Motor angeordnet. Die Folge daraus ist, dass beim Tausch der ABS/ESP-Einheit der Motor im Weg ist und möglichweise ausgebaut werden muss.

Daher erfolgt der Wunsch vom OEM, die bestehenden Systeme zu verkleinern oder neue möglichst integrierte und kompakte Systeme zu gestalten, um beispielsweise die obengenannten Problematiken zu umgehen. Hinzu kommt, dass es Rechts- und Linkslenker gibt und das Package des Bremssystems bzw. der Verbund eines Bremssystems (bestehend aus Vakuumpumpe, Bremskraftverstärker und ABS/ESP-Aggregat) trotz der unterschiedlichen Anordnung vorzugweise gleichbleiben soll.

Aktuell besteht der Trend, die räumliche Aufteilung des Bremssystem-Verbunds auf eine kompakte und integrierte "1-Box-Lösungen" zu wechseln. Dabei sind alle erforderlichen Komponenten wie Druckversorgung, hydraulische (Ventil-)Einheit (HCU), Regeleinheit (ECU) und Hauptzylinder in einer einzigen Baueinheit zusammengefasst. In der DE 10 2012 213 216 ist z. B. ein solches kompaktes "1-Box-Bremssystem" beschrieben.

Funktional ersetzt ein Teil des "1-Box-Bremssystem" den Vakuumverstärker und die Vakuumpumpe mit einem Elektromotor. Dabei gibt es eine freie einstellbare Bremskraftverstärkung die mittels Pedalweg moduliert werden kann. Diese Wegmessung des Bremspedals wird durch ein Pedalinterface bewerkstelligt. Die hydraulische Versorgung des "1-Box-Bremssystem" mit Bremsflüssigkeit erfolgt wie üblich über einen Vorratsbehälter der überwiegend mit einem Schwimmer den Flüssigkeitsstand misst. Um die Kompaktheit des Bremssystems zu erhöhen, wird sinnvollerweise der Vorratsbehälter ebenso in das Bremssystem integriert.

Für die Erfüllung der Aufgaben eines oben beschriebenen integrierten Bremssystems(1-Box-Bremssystem) benötigt man in der Regel fünf Sensortypen die maßgeblich für die Funktion sind:
- Drehwinkelsensor(en), der zur Kommutierung des Motors und zur Positionsbestimmung der Kolbenposition verwendet wird (eine mögliche Messeinrichtung zeigt das Patent DE 10 2011 017 436; Zahnradantrieb für den Target-Magnet zur Winkelmessung).
- Vorzugsweise zwei Pedalwegsensoren die eine Kraftmessung, Kolbenklemmen und Sensorausfall messen können (entsprechendes Beispiel ist im Patent DE 10 2011 050 869 A1 zu finden).
- Drucksensor(en), der den Hauptzylinderdruck misst
- Einen Füllstandsensor für den integrierten Bremsflüssigkeitsbehälter.
- Optional kann eine Elektrode vorgesehen werden, die eine Leckage in einem kleinen Auffangbehälter an geeigneter Stelle, z.B. unterhalb des Systems feststellt

Für die Anordnung der einzelnen Sensoren und Systemkomponenten gibt es aktuell unterschiedliche Ansätze:
- In der DE 10 2014 214095 (nachveröffentlichter Stand der Technik) wird für die Motorpositionsbestimmung die drehbare Spindel zum Kolbenantrieb stark verlängert. Dabei ist ein Target-Magnet mit der Spindel verbunden, der mit einem Sensor auf der Systemleiterplatte abgetastet werden kann.
   Ähnliche Lösungen sind bei Stellantrieben z. B. DE 10 2014 218034 (nachveröffentlichter Stand der Technik) bekannt, bei denen die Sensoren zur Motorsteuerung auf der Systemleiterplatte sitzen.
- Bei der in DE 10 2012 213 216 gezeigten Bremsanlage, ist eine erste durch den Fahrzeugführer betätigte Zylinder-Kolben-Anordnung beschrieben. Die Druckbereitstellungseinrichtung und der Ventilblock sind ebenso im selben Gehäuse angeordnet. Die Achse des Elektromotors der Druckbereitstellungseinrichtung ist im Wesentlichen senkrecht zur Längsachse der ersten Zylinder-Kolben-Anordnung angeordnet. Mit dieser Lösung ist bereits eine bestimmte Kompaktheit angestrebt, die jedoch noch weiter verbessert werden kann (Breite, Länge). Insbesondere lässt die Anpassungsfähigkeit an verschiedene Montagesituationen zu wünschen übrig, wie z.B. die Montage im Motorraum (sogenannte "front bolted").
- Weiterer Stand der Technik ist aus der DE 10 2013 202350 A1 und WO02/47947 A1 bekannt

### Aufgabe der Erfindung

Aufgabe der Erfindung ist es, eine möglichst kompakte Bremsbetätigungsanlage zu schaffen, die insbesondere auch bzgl. der Sensoreinrichtungen viele Freiheitsgrade in der konstruktiven Gestaltung aufweist und somit auch flexibel für verschiedene Fahrzeuge bzw. Einbausituationen ist.

### Lösung der Aufgabe

Ausgehend von der DE 10 2012 213216 A1 wir die die Aufgabe erfindungsgemäß durch den Gegenstand nach Anspruch 1 gelöst.

Mit anderen Worten erfolgt eine Übertragung von Bewegungen bzw. Sensorsignalen mittels einer Übertragungseinrichtung auf ein Sensortarget , wobei insbesondere Flussleitstücke zum Einsatz kommen in die Nähe von Sensor- bzw. Auswerteelementen auf einer Systemleiterplatte (PCB) der Steuer und Regeleinheit (ECU).

Mit der erfindungsgemäßen Lösung wird eine Bremsbetätigungsanlage geschaffen, die bezüglich der Sensoreinrichtungen eine flexible kompakte, gewichts- und kostengünstige Anordnung ermöglicht, die überdies für verschiedene flexible Gestaltungsmöglichkeiten der Anordnung der Hauptkomponenten (HCU, ECU, Motor, Pedalinterface, Hauptbremszylinder, Druckversorgung) unter Berücksichtigung der Einbaubedingungen anpassbar ist und eine kostengünstige und ausfallsichere Lösung ohne Kabel/Stecker ermöglicht. Insbesondere soll der Randbedingungen Rechnung getragen werden, dass nicht alle Sensoren direkt in der Nähe der ECU angeordnet sind. Davon sind insbesondere die wichtigsten Sensoren betroffen (Pedalhubsensor, Motorwinkelgeber).

Eine vorteilhafte Ausführung der Erfindung sieht vor, dass die Sensor- bzw. Auswerteelemente zumindest einer Sensoreinrichtung, insbesondere die Sensor- bzw. Auswertelemente eines Pedalbewegungssensors, eines Motorbewegungs- bzw. Drehwinkelsensors und eines Kolbenbewegungssensors oder auch weiterer bzw. aller Sensoreinrichtungen, auf einer in der elektronischen Steuer- und Regeleinheit (ECU) angeordneten Systemleiterplatte (PCB) angeordnet sind und die Betätigungstargets (z.B. Permanentmagnete) in der Nähe der Auswerteelement angeordnet sind bzw. das magnetische Signal über Flussleitstücke in der Nähe der PCB geführt werden.

Insbesondere kann zweckmäßig eine mechanische Übertragung der Sensorsignale auf ein Target in die Nähe des Auswerteelementes in der ECU bzw. auf der Systemleiterplatte (PCB) oder mit Flussleitstücken als Übertragungsmedium erfolgen.

Zweckmäßig kann ein Sensor zur Bestimmung des Bewegungsweges eines Kolbens der Kolben-Zylinder-Einheit bzw. eines damit verbundenen Bremspedals (PB) vorgesehen sein, wobei die Betätigung des Sensortargets mittels des mechanischen Betätigungsmechanismus, insbesondere mittels einer Gestänge- und Getriebeanordnung erfolgt.

Gemäß einer weiteren vorteilhaften Ausführung ist ein Sensor zur Bestimmung des Bewegungsweges eines Kolbens der Kolben-Zylinder-Einheit bzw. eines damit verbundenen Bremspedals (PB) vorgesehen, wobei zumindest ein Sensortarget am Kolben angeordnet ist und die Übertragung zur elektronischen Steuer- und Regeleinheit (ECU) mittels Flussleitstücken erfolgt.

Insbesondere kann ein Sensor zur Bestimmung der Motor- bzw. Rotorbewegung vorgesehen sein, wobei die Betätigung des Sensortargets mittels des mechanischen Betätigungsmechanismus, insbesondere mittels Gestänge- und Getriebeanordnung erfolgt.

Eine weitere Variante sieht vor, dass das Getriebe in einem separaten Gehäuse am bzw. im Motor angeordnet ist und eine kraftschlüssige Kupplung zum Targetantrieb vorgesehen ist.

Gemäß einer anderen vorteilhaften Ausführungsform ist vorgesehen, dass ein Sensor zur Bestimmung der Motor- bzw. Rotorbewegung vorgesehen ist, wobei zumindest ein Sensortarget am Rotor bzw. eines damit verbundenen Elementes, insbesondere Polscheibe, angeordnet ist und die Übertragung zur elektronischen Steuer- und Regeleinheit (ECU) mittels Flussleitstücken erfolgt.

Zweckmäßig ist ein Sensor zur Bestimmung der Bewegung eines Niveaugebers, insbesondere in einem Schwimmkörper eines Vorratsbehälters (VB), wobei ein Sensortarget an einem beweglichen Teil des Niveaugebers, insbesondere am Schwimmkörper angeordnet ist und dass die Übertragung vom Sensortarget zur elektronischen Steuer- und Regeleinheit mittels Flussleitstücken erfolgt.

Insbesondere können die Sensorelemente zumindest eines Sensors, insbesondere aller Sensoren, auf einer in der elektronischen Steuer- und Regeleinheit (ECU) befindlichen Systemleiterplatte (PCB) angeordnet sein.

Der Abstand des Sensortargets bzw. der Flussstücke zum Sensor- bzw. Auswerteelement ist gering, insbesondere kleiner als 5 mm.

Gemäß einer vorteilhaften Ausführung ist vorgesehen, dass zumindest einer der Sensor- bzw. eines der Auswerteelemente ein Hallelement ist, wobei insbesondere dessen Außen- und Schutzbeschaltung auf der Systemleiterplatte (PCB) angeordnet ist.

Bei einer vorteilhaften Ausführung ist vorgesehen, dass die Betätigungsvorrichtung mindestens eine erste (GH1) und eine zweite (GH2) Gehäuseeinheit aufweist, wobei die erste Gehäuseeinheit (GH1) insbesondere alle Kolben der Kolben-Zylinder-Einheit (Hauptzylinder) und der Druckversorgungseinheit und die zweite Gehäuseeinheit (HCU)(GH2) die Ventilanordnung aufnimmt. Hierbei kann insbesondere zumindest eine Sensorbetätigungseinrichtung teilweise in der ersten (GH1) oder/und zweiten Gehäuseeinheit (GH2) und oder dem Motorgehäuse angeordnet bzw. durch diese hindurchgeführt sein.

Mit der Erfindung bzw. ihren vorteilhaften Ausgestaltungen und Ausführungsformen wird eine 1-Box-Lösung geschaffen, die folgende Anforderungen erfüllt bzw. Vorteile aufweist:
- kleiner Einbauraum und Einbaulänge
- weitgehend symmetrische Gestaltung für Linkslenker (LL) und Rechtslenker (RL)
- gute Zugänglichkeit der hydraulischen und elektrischen Anschlüsse für die Montage
- die Befestigung an der Stirnwand (Spritzwand) des Fahrzeuges soll sowohl vom Motor ("front bolted") als auch vom Fußraum möglich sein
- möglichst geringe Kosten und Gewicht
- modular für verschiedene Ausbaustufen, z. B. autonomes Fahren
- hohe Fehlersicherheit
- geringe Ausfallrate

Gemäß der Erfindung bzw. ihrer vorteilhaften Ausgestaltungen und Ausführungen sind hierzu ferner folgende Maßnahmen vorgesehen (wobei insbesondere eine Struktur mit mindestens zwei Gehäusen vorgeschlagen wird):
- ein erstes Gehäuse(GH1), welches alle system relevanten Kolben aufnimmt (THZ, Kolben der Druckversorgung und Pumpe), einen Befestigungsflansch für die Spritzwand vorweist und ein Pedalinterface mit Pedalsensorbetätigung besitzt.
- ein zweites Gehäuse (GH2; HCU, Hydraulic Control Unit), mit Magnetventile, Rückschlagventile, Blenden und Druckgeber, welche zur Befestigung mit einem geeigneten verformbaren Material wie z. B. Aluminium, verstemmt oder eingepresst werden.
- beide Gehäuse können auch erweitert oder zu einem Gehäuse zusammengefasst werden.
- das elektrische Steueraggregat ECU sitzt direkt auf der HCU, wie heute weltweit üblich.
- die geringen Kosten, Ausfallraten und Störsicherheit können erreicht werden, indem das Sensorauswerteelement (Hall) direkt auf der Systemleiterplatte sitzt und das Target in der Nähe ist.

Es entfällt eine zusätzliche Leiterplatte mit Steckverbindung. Einstreuungen auf den Anschlussleitungen kommen damit nicht vor. Am einfachsten wird der gesamte Sensor mit Target realisierbar, wenn das Target mit entsprechender Betätigung direkt am Sensorelement sitzt. Dies ist realisierbar mit einer Betätigung über einen Zahnradantrieb, sowohl für Pedalweg als auch für den Motor. Schwieriger ist dies bei einem Motor, der distanziert von der Systemleiterplatte angeordnet ist. Eine gute Lösung hinsichtlich Handling bei Motorherstellung und Gesamtmontage ist die autarke Lagerung der Zahnräder im Motor. Für den Sensorbetrieb wird bei der Motorendprüfung eine Welle mit dem Zahnrad durch Reibschluss gekoppelt. Im Aggregat wird bei der Gesamtmontage die Welle mit dem Target in der Gehäuseeinheit befestigt. Dabei können alle Parameter wie Reibschluss, mechanischen Widerstände und Signale geprüft werden.

Führt man die Pedalwegsensoren ebenfalls mit einem Zahnradantrieb aus (analog zum Motorpositionsmessprinzip), so kann der mechanische Antrieb einfach oder redundant gestaltet werden. Bei redundantem Antrieb bietet sich die Verwendung eines elektrischen Gliedes (E-KWS) an, bei dem zusätzlich das Blockieren des Antriebes festgestellt werden kann.
- Wird der Zahnradantrieb bei Pedalwegsensoren nicht gewünscht, so kann der Target-Magnet z. B. im Kolben sitzen. Die Flussänderung über die Kolbenrichtung bei der Betätigung des Pedals, kann z. B. über Flussleitstücke zu einem Hall übertragen werden.

Dieses Prinzip lässt sich auch auf den Niveaugeber für den Bremsflüssigkeitsbehälter übertragen, wobei hier "nur" ein Schwellwert erfasst wird. Eine Hilfestellung leisten hier wiederum Flussleitstücke, die es erlauben, das Sensorelement nicht in der Nähe des Target-Magneten zu positionieren. Alternativ würde sich hier auch ein optisches Verfahren anbieten.
- für die Positionserkennung eines Kolbens oder Niveaugebers kann ein 1D - Hallsensor mit nur zwei Anschlüssen verwendet werden. Wie bereits erwähnt, wäre in diesem Fall das Sensorelement direkt in die Systemleiterplatte angebracht oder mit einem Stecker verbunden.
- Der Motor sitzt unterhalb des GH1 mit möglichst großem Abstand zur Spritzwand des Fahrzeuges. Hier will man viel Raum für die hydraulischen und elektrischen Verbindungleitungen schaffen. Ggf. kann er zusätzlich um einen Winkel nach vorn geneigt verbaut werden.
- der Motor ist im GH1 mit einer Pumpe, idealerweise mit Kolben- oder Doppelhubkolbenpumpe verbunden.
- ein Vorratsbehälter ist seitlich am System angebracht und mit dem Saugeingang der Pumpe verbunden.
- im GH1 oder im GH2 sind die Sensorbetätigungen untergebracht bzw. hindurchgeführt und übertragen die Bewegung des Pedals und des Rotors auf einen drehbaren Target-Magnet. Das Auswerteelement (z. B. Drehwinkelsensor (Hall)) sitzt direkt auf der Systemleiterplatte bzw. ist mit dieser verbunden. Damit sind keine zusätzlichen Leitungen und/oder Leiterplatten (PCB) zur Aufnahme der z. B. des Hallelements notwendig.
- mit der Systemleiterplatte ist mindestens ein Sensorelement verbunden, welches den Flüssigkeitsstand im Vorratsbehälter misst.
- ein elektrisches Anschlusselement (Stecker) zum Bordnetz ist seitlich oder stirnseitig unter einem Vorsatz der Steuereinheit (ECU) angebracht. Dies zeigt sich vorteilhaft, da zusätzlich Einbauvolumen im Aggregateraum geschaffen wird. Letzteres setzt eine kurze Baulänge des GH1 und GH2 voraus. Alternativ kann die Steuereinheit seitlich oder stirnseitig angeordnet sein.
- die hydraulischen Anschlussleitungen zu den Radbremsen sind stirnseitig angebracht, damit die Zugänglichkeit für LL und RL vereinfacht wird.
- eine ggf. auftretende Leckage durch Dichtungen kann durch ein im unteren Teil erweitertes Motorgehäuse aufgefangen und über eine Elektrode sensiert werden.

Weitere Ausführungsformen bzw. Ausgestaltungen der Erfindung und deren Vorteile sind in weiteren Patentansprüchen enthalten, auf die hier Bezug genommen wird.

Es zeigen:
- Fig. 1:: schematisch eine Darstellung einer Betätigungsvorrichtung für ein Bremssystem für ein Kraftfahrzeug;
- Fig. 2:: eine Ansicht des Bremssystems von vorne mit Unterteilung und Aufbau der Hauptkomponenten;
- Fig. 3:: einen Motorsensorantrieb;
- Fig. 4:: einen erster Teil eine Pedalwegsensorenantrieb (Verbindungelement zum Betätigungspedal);
- Fig. 4a:: einen zweiter Teil Pedalwegsensorenantrieb (Verbindungelement zum Target);
- Fig. 5:: eine Kolben-Wegmessung mit mehreren Magnet-Targets mit einem Flussleitstück zum Sensorauswerteelement;
- Fig. 5a:: eine Kolben-Wegmessung mit einem Magnet-Targets im Kolben und mehreren Flussleitstücken/Sensorauswertelemente;
- Fig. 5b:: eine weitere Kolben-Wegmessung mit Flussleitstücken;
- Fig. 6:: Niveaugeberposition mit Flussleitstücken;
- Fig. 7:: Motorsensoren mit Segmentsensor und Flussleitstücken.

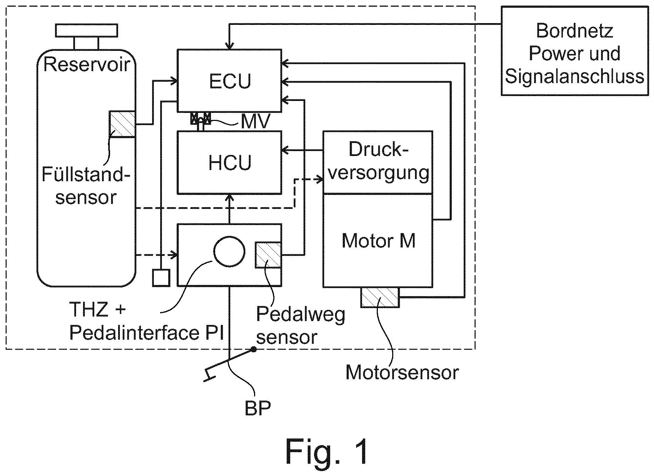

**Fig. 1** zeigt die Strukturierung und das Zusammenwirken der einzelnen Komponenten eines 1-Box-Bremssystems. Die wesentlichen Komponenten bestehen aus:
- Bremspedal (BP)
- Pedalinterface (PI) mit Tandemhauptzylinder (THZ)
- Motor (M) mit Druckkolben
- Hydraulikblock (HCU bzw. GH2)
- Steuergerät (ECU)
- Stecker (Anschluss ans Bordnetz für Versorgung und Kommunikation)
- Reservoir bzw. Nachlaufbehälter

Ausgehend vom Bremspedal, welches über das Pedalinterface auf den THZ-Kolben wirkt, erfolgt die Interaktion mit dem Fahrer. Es wird zu jederzeit der Pedalweg mit zwei dafür im System untergebrachten Sensoren gemessen. Das verschobene Volumen aus den THZ-Kolben gelangt weiter in die hydraulische Einheit (HCU), in der Magnetventile (MV) und Druckgeber vorhanden sind. Alle Ventile und der Druckgeber sowie alle Sensoranbindungen sind mit dem elektrischen Steuergerät verbunden und werden vom Gehäuse des elektrischen Steuergerätes zusammengefasst und umschlossen. Zu den Angebundenen Sensoren in der ECU gehören ein Motorpositionssensor, zwei Pedalwegsensoren, ein Drucksensor, ein Füllstandsensor und optional ein Elektrode zur Leckage-Flusserkennung, mit entsprechend kleinem Behälter, der z.B. in das HCU- oder ECU-Gehäuse integriert ist. Das Gehäuse wird mittels Schrauben an der hydraulischen Einheit (HCU) befestigt. Ein Dichtring zwischen den beiden Komponenten (HCU und ECU) verhindert dabei ein Eindringen diverser Fremdkörper. Die Energieversorgung und die Kommunikation mit anderen Steuergeräten nach außen, werden über einen Stecker am Bremssystem bewerkstelligt. Weiter verfügt das System eine Druckversorgung, die über einen E-Motor angetrieben wird. Diese Druckversorgung kann unterschiedliche ausführungsformen haben, welche zum Beispiel in DE 10 2014 117 726 beschrieben werden. Um das ganze Bremssystem mit der benötigten Bremsflüssigkeit zu bedienen, befindet sich ein Reservoir bzw. Vorratsbehälter am System.

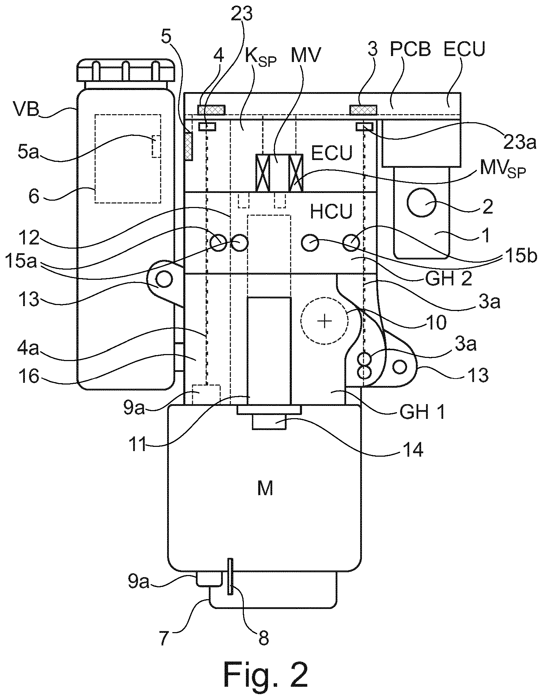

**Fig. 2** zeigt den einen mechanischen Aufbau aus dem bezüglich Fig. 1 beschriebenen Bremssystems, ausgehend von vorne in Richtung der Spritzwand eines Fahrzeuges. Beginnend von unten, ist der Motor (M) mit der Befestigung 14 an das Gehäuse GH1 angebunden. Der Motor treibt dabei eine Pumpe 11 an, die über Saugventile 16 mit dem Vorratsbehälter (VB) verbunden sind. Mögliche Pumpenausführungen sind in den Patentschriften DE 10 2014 109 628 und DE 10 2014 117 726 beschrieben. Das Gehäuse GH1, wo bewegliche Kolben gelagert sind, befindet sich integriert an einem Befestigungsflansch 13 zur Spritzwand und ist vom Motorraum zugänglich, was eine sog. "Frontbolted"-Montage möglich macht. Hierzu ist auf der Seite des Reservoirs bzw. Vorratsbehälters (VB) eine entsprechende Aussparung für das Befestigungswerkzeug vorzusehen.

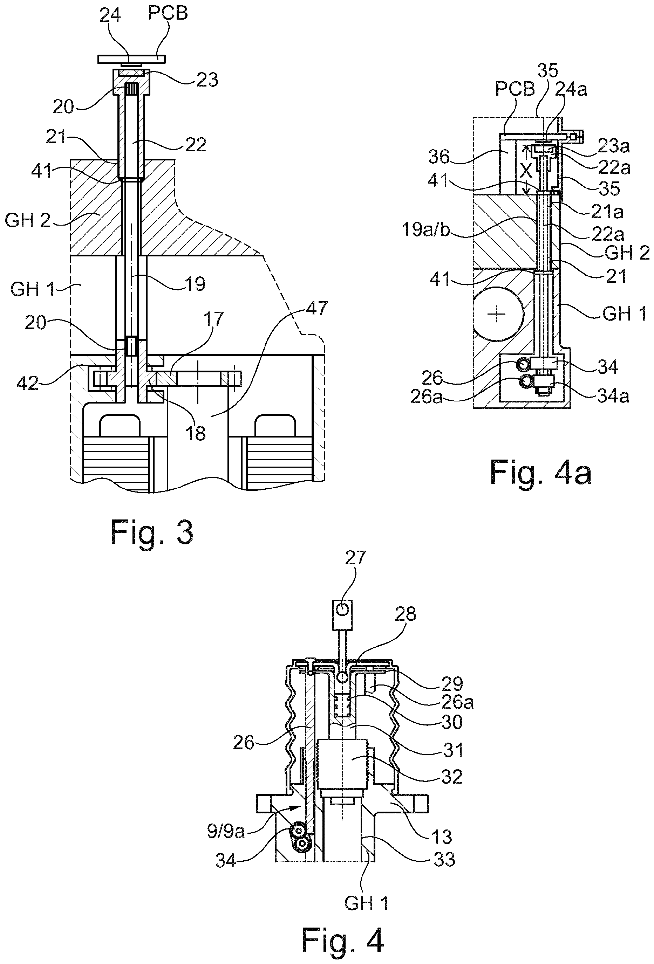

Im Gehäuse GH2 ist der Antrieb eines Sensortargets gelagert, welche in Fig. 3a und 4 detailliert dargestellt werden. Die Einrichtung des Motordrehwinkel-Targets kann vor (9a) oder hinter (9b) dem Motor liegen und dessen Winkelposition des Motors messen. Wie bereits bezüglich Fig. 1 beschrieben, sitzt die Steuereinheit (ECU) abgedichtet auf dem Gehäuse GH2 mit Magnetspulen und Kontakten für alle Sensoren, Ventilen und Motor.

Seitlich oder auch stirnseitig sitzt ein Anschlusselement 1 (Hauptstecker) mit dem Leitungssatz 2 zum Bordnetz. Auf der Unterseite des Motorgehäuses ist in eine Gehäuseerweiterung angebracht, wo die vorher angesprochene Elektrode für die Leckage-Erkennung sitzt. Ein möglicher Leckfluss wird z. B. vom Kolben in eine Schale an die Spindel und durch eine Spindelbohrung nach unten geleitet. Wird die Richtung vom Pedalinterface als Drehachse betrachtet, kann das System +/-90° gedreht in das Fahrzeug eingebaut werden. Natürlich bleibt dabei die Position des Bremspedals gleich, jedoch muss der zuvor angesprochene Auffangbehälter entsprechend anders angeordnet sein. Mögliche Positionen wären neben dem GH1 oder sogar in der ECU.

Alternativ zur dargestellten Ausführungsform gibt aus auch andere denkbare Varianten von 1-Box-Bremssystemen (wie z.B. in DE102012213216A1 ausgeführt). Auch in dieser Ausführungsform ist Motor und Pedalhub bzw. Kolbenweg aufgrund der Einbaurandbedingungen direkt in unmittelbarer Nähe zur PCB der ECU angeordnet und eine Vielzahl von Sensoren ist mit der ECU zu verbinden. d.h. auch in dieser und alternativen Packaging-Lösungsansätzen ist die erfindungsgemäße flexible Verbindung von Sensorsignalen über mechanische Übertragungsglieder bzw. Flussleitstücke vorteilhaft und vermeidet aufwändige Kontaktierungen, reduziert Kosten und erhöht die Zuverlässigkeit.

**Fig. 3** zeigt den in Fig. 2 dargestellten Antrieb eines Motordrehwinkelsensors. Das Antriebszahnrad 17 ist dabei auf der Welle vor oder hinter dem Motor angebracht. Dieses Zahnrad 17 ist aus Geräuschgründen schräg verzahnt und ist mit einem Antriebszahnrad 18 im Eingriff, welches auf eine Sicherung gegen Drehung 20 aufgepresst wird. Die Welle ist vorzugsweise im Gehäuse GH2 in einer Lagerbuchse 21 gelagert. Die große Länge von der Lagerung 21 zur Verzahnung 20a wird biegeelastisch genutzt, damit das Zahnrad 17 spielfrei läuft. Am Wellenende zum Sensor befindet sich ein Targetmagnet 23 mit einer Aufnahme aus Kunststoff 22, welche im Gehäuse GH2 eine gegenüberliegende Lagerung bildet. Der Magnet wird mit einen Sensorelement 24 (z.B. Hall) auf der Systemleiterplatte 25 verarbeitet.

Im Motorgehäuse ist ein Zahnradgehäuse befestigt, welches die beidseitige Lagerung des Antriebszahnrads beinhaltet. Die Welle mit Rändel hat in dem federnden Flansch des Zahnrads 18 eine ausreichende Verdrehsicherung, welche nur im Wesentlichen die kleine Lagerreibung und Trägheitsmoment bei der Motorbeschleunigung genügen muss. Der Motor mit Zahnradantrieb kann damit auch in der Motorendprüfung geprüft werden, indem eine Welle zur Meßeinrichtung eingesteckt wird. In der Aggregate-Endmontage wird die Welle 19 mit Lagerung im GH2 befestigt und im Zusammenbau der Sensor geprüft.

**Fig. 4** zeigt die Betätigung der Pedalwegsensoren. Aus Sicherheitsgründen werden zwei Pedalwegsensoren verwendet, welche über ein Federelement zur Pedalkraftmessung verwendet werden - siehe hierzu auch DE 10 2011 101 655 der Anmelderin, auf die hier erweitert eingegangen und verwiesen wird. Damit ist ein Pedalstößel 27 mit einer der Pedalplatte 28 mit Kolben 31 gekoppelt, der auf ein Federelement 30 wirkt. Dieses wirkt auf den Kolben 31 zur Druckerzeugung im Hauptzylinder (THZ) im Druckraum 33. Siehe hierzu auf das Patent DE 10 2014 117 726 der Anmelderin, auf die insoweit Bezug genommen wird. Dieser Kolben 31 ist mit einer Kolbenplatte 29 verbunden. Die Pedalplatte 28 ist zur Sensorbetätigung mit einer ersten Zahnstange 26 verbunden und eine Kolbenplatte 29 mit einer zweiten Zahnstange 26a . Beide Zahnstangen 26, 26a treiben je ein Zahnrad 24,34a an, welches in Fig. 4a dargestellt ist. Das erste Gehäuse GH1 ist im Stirnwandbereich mit dem Befestigungsflansch 13 befestigt.

**Fig. 4a** zeigt einen Sensorantrieb für beide Pedalwegsensoren. Zahnstangen 26 und 26a wirken auf unterschiedlichen Ebenen auf Zahnräder 34 und 34a. Die Verbindung zum Sensortarget entspricht weitestgehend dem in Fig.3 gezeigten Motorsensor. Auch hier sind biegeelastische Wellen 19a, 19b eingesetzt, die in Lagerbuchsen 21 und 21a gelagert und mit dem Sensortarget 22a mit dem Target 23a (Magnet) gegen Drehungen fixiert sind. Das Target 23a wirkt auf ein Sensorelement 24a, welches mit den anderen Sensorelementen auf der gemeinsamen Systemleiterplatte (PCB)25 elektrisch leitend befestigt ist. Das Gehäuse 35 der Steuereinheit ECU enthält nach dem bewährten Stand der Technik die Systemleiterplatte (PCB) 25 mit allen Bauteilen und die in Fig. 2 gezeigten Magnetspulen. Wegen der Wärmeabfuhr sitzt die Systemleiterplatte (PCP) 25 auf einer Aluminium-Platte, da insbesondere die MOSFET für die Motorsteuerung Verlustwärme erzeugen. Diese kann über die Aluminium-Platte einfach über eine Wärmeleitleiste auf das zweite Gehäuse übertragen werden.

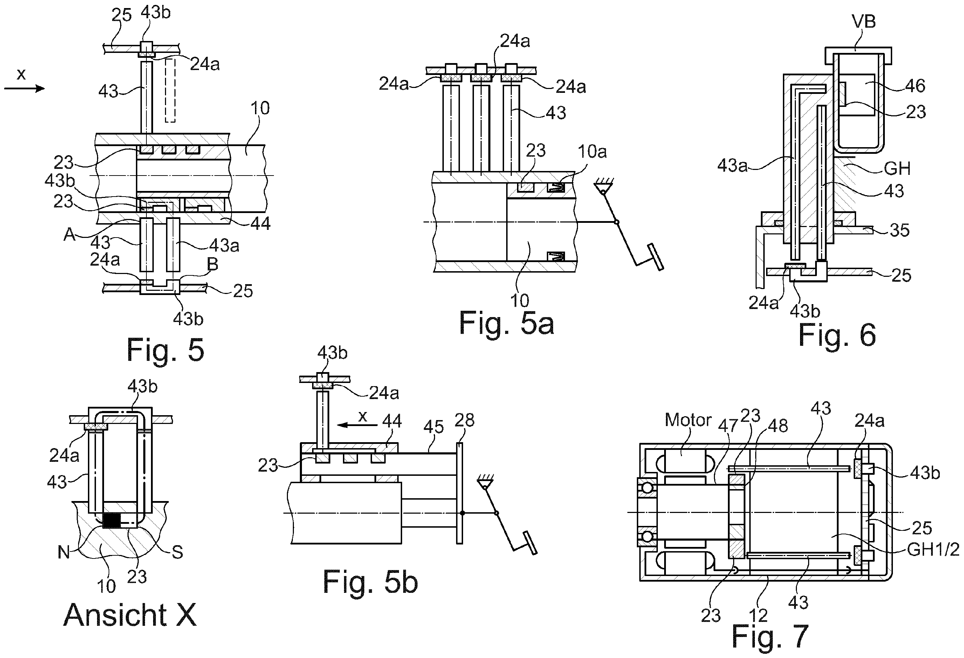

**Fig. 5** zeigt eine Anordnung zur Messung einer Bewegung eines Kolbens 10, der auch mit einem Bremspedal (BP) verbunden sein kann und damit auch den Pedalweg misst. Mittels eines Sensorelements 24a, welches auf der Systemleiterplatte 25 sitzt, wird über Flussleitstücke 43 bzw. 43b der magn. Fluss eines Target-Magneten zum Sensor geführt. Die Magnete sind abhängig von der Anordnung des Magnetkreises mit Flussleitstücken unterschiedlich magnetisiert. Die obere und untere Bildhälfte zeigen zwei unterschiedliche Anordnungsmöglichen bzw. Ausführungen. Die Anordnung oben stützt sich dabei auf die Flussänderung von mehreren unterschiedlich gepolten Magneten 23 und kann mit den Sensorelement 24a gemessen werden. Die untere Anordnung und dessen Wegmessung kommt hingegen mit einem Targetmagnet aus, jedoch muss der magnetische Fluss durch die Flussleitstücke anders geleitet werden. Der magnetische Rückschluss 43 und das Flussleitstück 43a sind so ausgeführt, dass mit der Bewegung des Magneten in Messrichtung eine N/S Polung detektiert werden kann. Abhängig von den Anordnungen, müssen die Luftspalte, Magneten und Flussleitstücke dementsprechend ausgelegt werden, um eine geeignete Messung zu gewährleisten. Letztendlich kann die Linearisierung und die Signalverarbeitung die Wegmessung entweder in den Sensorelementen oder auf der ECU stattfinden. Zur Fig. 5 gehörend ist unterhalb getrennt die Ansicht X der oberen Ausführungsform von Fig. 5 gezeichnet. In der Darstellung sind der Kolben 10, Flussleitstücke 43, Permanentmagnete 23 und Sensorelement 24a dargestellt.

Zur Luftspaltminimierung bestehen konstruktiv verschiedene Potenziale, z. B. bei A Einkleben oder Verstemmen in einer Aussparung des Gehäuses 44. Die Flussleitstücke können kostengünstig als Stanz-, Press- oder Formteile hergestellt werden. Abhängig von den Anforderungen an Weg, Genauigkeit können verschiedene Sensortargets hintereinander geschaltet werden. Der Signalverlauf des Sensorelements, z. B. sinusförmig ist Stand der Technik und wird nicht getrennt dargestellt.

**Fig. 5a** zeigt vereinfacht eine Alternative der Anordnung von Sensor-target 23 und Sensorelement 24a mit Flussleitstücken, indem nur ein Target im Kolben 10 mit Dichtung 10a verschiedene Sensorelemente 24a aktiviert. Der Magnetkreis ist in Fig. 5 beschrieben.

**Fig. 5b** zeigt eine Anordnung zur Pedalwegemessung indem das Sensortarget 23 auf einer getrennten Stange 45 oder Schieber im Gehäuse 44 gelagert ist und mit der Pedalplatte 28 verbunden ist. Der Magnetkreis ist in der Ansicht dargestellt und besitzt mit dem Target-Magnet 23, der mit der Stange oder Leiste 45 verbunden ist, eine Polrichtung N-S. Der Fluss wird über die Flussleitstücke 43 und 43b zum Sensorelement 24a geleitet. Diese Anordnung ergibt eine konstruktiv optimierte Unterbringung im gesamten Packaging des Systems unabhängig vom Hauptzylinder-Kolben.

**Fig. 6** zeigt ein Prinzip mit Flussleitstücken zur Messung des Füllstandes des Bremsflüssigkeit-Vorratsbehälter VB. Hierzu ist das Sensortarget im Schwimmkörper 46 gelagert, und der Magnetfluss wird über die Flussleitstücke 43, 43a, 43b zum Sensorelement 24a geleitet, welches wiederum auf der Systemleiterplatte (PCB) 25 sitzt. Die Flussleitstücke sind hier in ein Gehäuse eingespritzt, welches mit der Gehäuseeinheit GH1 oder GH2) verbunden und befestigt sind. Die Abdichtung zum ECU-Gehäuse übernimmt die Dichtung D.

**Fig. 7** zeigt das Prinzip mit Flussleitstücken zur Messung der Motorposition als Alternative zu Fig. 3. Die Anordnung hat ein bekanntes Segmentmagnet-Polrad 48 am Motors, welches mit dem Rotor 47 verbunden ist. Das Polrad wird mit einen Sensorelement 24a abgetastet und kann abhängig von der Anzahl der Polradsegmente einen gewissen Rotorwinkel absolut messen. Diese Anwendung ist weit verbreitet, wobei dieser Aufbau mit Flussleitstücken modifiziert wurde.. Das Polrad kann eine radiale Anordnung (obere Bildhälfte) oder axiale Anordnung der Pole (untere Bildhälfte) haben. Auch hier soll der Magnetfluss vom Target 23 über Flussleitstücke 43, 43a, 43b zum Sensorelement 24a auf dem System PCB 25 im ECU-Gehäuse geführt werden. Der Magnetkreis kann der Fig. 5b entsprechen, bei der die Flussleitstücke in einem Segment angeordnet und in der Gehäuseeinheit 1 oder 2 gelagert sind. Der Motor ist elektrisch über el. Anschlusselemente 12 mit der Systemleiterplatte (PCB) 25 verbunden.

Mit diesem Sensorkonzept, wo das Sensorelement möglichst aller Sensoren auf der Systemleiterplatte (PCB) 25 sitzt, ist eine kostengünstige Lösung mit vielen Freiheitsgraden in der konstruktiven Gestaltung dargestellt.

### Bezuaszeichenliste

- 1: Anschlusselement (Hauptstecker)
- 2: Leitungssatz
- 3: Sensorelement für Pedalweg
- 3a: Betätigung Target für Pedalwegsensor
- 4: Sensorelement für Motordrehung
- 4a: Betätigung Target für Motorwegsensor
- 5: Sensorelement für Füllstand
- 5a: Target für Füllstandssensor
- 6: Schwimmkörper im Reservoir
- 7: erweitertes Motorgehäuse bzw. Leckagereservoir
- 8: Elektrode
- 9: Antrieb für Targetbetätigung Motorgeber vor dem Motorrotor
- 9a: Antrieb für Targetbetätigung Motorgeber hinter dem Motorrotor
- 10: THZ-Kolben
- 10a: Kolbendichtung
- 11: Pumpe oder Pumpenkolben
- 12: el. Anschlusselement zum Motor mit mehreren Leitungen
- 13: Flansch zur Befestigung an Stirnwand
- 14: Motorbefestigung
- 15: hydraulischer Anschluss zur Radbremse
- 16: Anschluss zum Pumpensaugventil
- 17: Antriebszahnrad
- 18: Abtriebszahnrad
- 19: Welle 1
- 19a/b: Welle 2 und 3
- 20: Verdrehsicherung (Rändel)
- 21: Lagerbuchse
- 21a: Lagerbuchse
- 22: Targetaufnahme
- 22a: Targetaufnahme
- 23: Target (Magnet)
- 23a: Target (Magnet)
- 24: Sensorelement
- 24a: Sensorelement
- 25: Systemleiterplatte PCB
- 26: Zahnstange 1
- 26a: Zahnstange 2
- 27: Pedalstößel
- 28: Pedalplatte
- 29: Kolbenplatte
- 30: Feder der Kraftwegmessung
- 31: Kolben
- 32: Dichtungs- und Lagerbuchse
- 33: Druckraum für Kolben
- 34: Zahnrad 1
- 34a: Zahnrad 2
- 35: Gehäuse ECU
- 36: Wärmeleitleiste
- 37: E/E Baueinheiten
- 38: Aggregate von z. B. Klimaanlagen
- 39: Stirnwand
- 40: Kabelraum
- 41: Anschlagring
- 42: Zahnradgehäuse
- 43: Flussleitstücke
- 43a: Rückschluss-Flussleitstück a
- 43b: dto. b
- 44: Gehäuse
- 45: Stange / Schieber
- 46: Schwimmkörper
- 47: Rotor
- 48: Polrad

- GH1: erste Gehäuseeinheit
- GH2: zweite Gehäuseeinheit
- VB: Bremsflüssigkeitsbehälter
- PI: Pedalinterface
- MV: Magnetventile
- LL: Linkslenker
- RL: Rechtslenker
- PCP: Leiterplatte
- K_{Sp}: Anschluss Magnetspule
- D: Dichtung

## Patentansprüche

1. Betätigungsvorrichtung für eine Kraftfahrzeugbremse, folgende Komponenten aufweisend:
- eine Betätigungseinrichtung, nämlich ein Bremspedal (PB),
- eine von einem elektromotorischen Antrieb (M) angetriebene Druckversorgungseinrichtung (11),
- eine mittels der Betätigungseinrichtung betätigbaren Kolben-Zylinder-Einheit, die hydraulisch mit einem Druckmittelvorratsbehälter (VB) verbunden ist und die zumindest zwei Druckräume bildet, die mit hydraulischen Bremskreisen verbunden sind,
- eine Ventilanordnung (HCU) mit Ventilen zum radindividuellen Einstellen von Bremsdrücken und zum Trennen oder Verbinden der Radbremsen mit der Druckversorgungseinrichtung (11) und der Kolben-Zylinder-Einheit,
- eine elektronische Steuer- und Regeleinheit (ECU), und
- zumindest eine Sensoreinrichtung, mit zumindest einem Sensorelement (3,4,5,24,24a) und einem Sensortarget (5a,23,23a), zur Sensierung einer Bewegung einer Vorrichtungskomponente,
wobei das zumindest eine Sensorelement (3, 4, 5, 24, 24a) der Sensoreinrichtung in der elektronischen Steuer- und Regeleinheit (ECU)angeordnetoder mit dieser verbunden ist, und dass eine Bewegung der Vorrichtungskomponente (10; 45; 46; 48) über eine Sensorbetätigungseinrichtung zur elektronischen Steuer- und Regeleinheit (25) übertragen wird
**dadurch gekennzeichnet, dass**
die Übertragung der Bewegung der Vorrichtungskomponente (10; 45; 46; 48) zum zugehörigen Sensorelement mittels Flussleitstücken (43, 43a, 43b) erfolgt.

2. Betätigungsvorrichtung nach Anspruch 1,
**dadurch gekennzeichnet, dass**
- die Sensorelemente (3, 4, 5, 24, 24a) zumindest einer Sensoreinrichtung oder eine Gruppe der Sensoreinrichtungen, auf einer in der elektronischen Steuer- und Regeleinheit (ECU) angeordneten Systemleiterplatte (25) angeordnet sind
und/oder
- zumindest die Sensorelemente der für die dynamische Funktion mit kritischer Zuverlässigkeit und Genauigkeit relevanten Sensoreinrichtung in der
elektronischen Steuereinheit (ECU)angeordnet sind.

3. Betätigungsvorrichtung nach einem der vorhergehenden Ansprüche, **dadurch gekennzeichnet, dass**
- eine Sensoreinrichtung zur Bestimmung des Bewegungsweges eines Kolbens (10) der Kolben-Zylinder-Einheit oder des damit verbundenen Bremspedals (PB) vorgesehen ist, wobei die Betätigung eines Sensortargets (23, 23a) mittels eines mechanischen Betätigungsmechanismus erfolgt
und/oder
- eine Sensoreinrichtung zur Bestimmung des Bewegungsweges eines Kolbens (10) der Kolben-Zylinder-Einheit oder des damit verbundenen Bremspedals (PB) vorgesehen ist, wobei zumindest ein Sensortarget (23) am Kolben (10) angeordnet ist und wobei die Übertragung zum zugehörigen Sensorelement mittels Flussleitstücken (43,
43a, 43b) erfolgt
und/oder
- eine Sensoreinrichtung zur Bestimmung einer Motor- oder Rotorbewegung
vorgesehen ist, wobei die Betätigung des Sensortargets (23, 23a) mittels des mechanischen Betätigungsmechanismus erfolgt.

4. Betätigungsvorrichtung nach Anspruch 3,
**dadurch gekennzeichnet, dass**
ein Getriebe in einem separaten Gehäuse am oder im Motor angeordnet ist und eine kraftschlüssige Kupplung zum Targetantrieb vorgesehen ist.

5. Betätigungsvorrichtung nach einem der vorhergehenden Ansprüche, **dadurch gekennzeichnet, dass**
- eine Sensoreinrichtung zur Bestimmung der Motor-oder Rotorbewegung vorgesehen ist, wobei zumindest ein Sensortarget am Rotor oder eines damit verbundenen Elementes, angeordnet ist
und die Übertragung zur elektronischen Steuer- und Regeleinheit (ECU) mittels Flussleitstücken (43, 43b) erfolgt
und/oder
- eine Sensoreinrichtung zur Bestimmung der Bewegung eines Niveaugebers vorgesehen ist, wobei das Sensortarget (23) an einem beweglichen Teil des Niveaugebers angeordnet ist und dass
die Übertragung vom Sensortarget (23) zum Sensorelement mittels Flussleitstücken (53, 43a, 43b) erfolgt.

6. Betätigungsvorrichtung nach einem der vorhergehenden Ansprüche,
**dadurch gekennzeichnet, dass**
- ein Abstand des Sensortargets oder der Flussstücke zum Sensorelement kleiner als 5 mm ist
und/oder
- zumindest eines der Sensorelemente ein Hallelement ist.

7. Betätigungsvorrichtung nach einem der vorhergehenden Ansprüche,
**dadurch gekennzeichnet, dass**
die Betätigung zumindest eines Sensortargets über einen Zahntrieb (9, 9a) erfolgt.

8. Betätigungsvorrichtung nach einem der vorhergehenden Ansprüche,
**dadurch gekennzeichnet, dass**
- eine Betätigungs- oder Längsachse der Kolben-Zylinder-Einheit im Wesentlichen senkrecht zu einer Betätigungs- oder
Längsachse der Druckversorgungseinrichtung (11) verläuft und/oder
- der Druckmittelvorratsbehälter (VB) seitlich neben der ersten Gehäuseeinheit
(GH1) und der zweiten Gehäuseeinheit (GH2) sowie der elektronischen Regeleinheit (ECU) angebracht ist.

9. Betätigungsvorrichtung nach einem der vorhergehenden Ansprüche, **dadurch gekennzeichnet, dass**
- zumindest eine Sensorbetätigungseinrichtung teilweise in der ersten (GH1) oder/und zweiten Gehäuseeinheit (GH2) und/oder des Motorgehäuses angeordnet oder durch diese hindurchgeführt ist und/oder
- redundante Pedalwegsensoren mittels Zahnstangen (26,26a) betätigt werden, die, an dem Bremspedal (PB) gekoppelt sind.

10. Betätigungsvorrichtung nach einem der vorhergehenden Ansprüche, **dadurch gekennzeichnet, dass**
zumindest eine Sensorbetätigungseinrichtung eine Einrichtung
- zur Umwandlung einer translatorischen in eine rotatorische Bewegung und/oder
- zur Änderung der Bewegungsrichtung aufweist.

11. Betätigungsvorrichtung nach Anspruch 10,
**dadurch gekennzeichnet, dass**
bei der Sensorbetätigungseinrichtung eine translatorische Bewegung erfasst wird, die in eine rotatorische Bewegung des Sensortargets umgewandelt wird, wobei das Sensortarget als N/S Permanentmagnet ausgeführt ist.

12. Betätigungsvorrichtung nach einem der vorhergehenden Ansprüche, **dadurch gekennzeichnet, dass**
das Motorgehäuse eine Erweiterung (7) aufweist, um Leckageflüssigkeit aufzufangen, wobei in der Erweiterung ein Sensor (8) zur Sensierung der Leckageflüssigkeit vorgesehen ist.

## Claims

1. Actuating device for a motor vehicle brake, comprising the following components:
- an operating device, namely a brake pedal (PB),
- a pressure supply device (11) driven by an electric motor drive (M),
- a piston-cylinder unit which can be actuated by means of the operating device, which is hydraulically connected to a pressure fluid reservoir (VB) and which forms at least two pressure chambers which are connected to hydraulic brake circuits,
- a valve arrangement (HCU) having valves for wheel-specific adjustment of brake pressures and for disconnecting or connecting the wheel brakes to the pressure supply device (11) and the piston-cylinder unit,
- an electronic control and regulation unit (ECU), and
- at least one sensor device, having at least one sensor element (3, 4, 5, 24, 24a) and a sensor target (5a, 23, 23a), for sensing a movement of a device component,
wherein the at least one sensor element (3, 4, 5, 24, 24a) of the sensor device is arranged in the electronic control and regulation unit (ECU) or connected thereto, and that a movement of the device component (10; 45; 46; 48) is transmitted to the electronic control and regulation unit (25) via a sensor actuating device,
**characterized in that**
the transmission of the movement of the device component (10; 45; 46; 48) to the associated sensor element is effected by means of flux conductors (43, 43a, 43b).

2. Actuating device according to claim 1,
**characterized in that**
- the sensor elements (3, 4, 5, 24, 24a) of at least one sensor device or a group of the sensor devices are arranged on a system circuit board (25) arranged in the electronic control and regulation unit (ECU) and/or
- at least the sensor elements of the sensor device relevant for the dynamic function with critical reliability and accuracy are arranged in the electronic control unit (ECU).

3. Actuating device according to one of the preceding claims, **characterized in that**
- a sensor device for determining the path of movement of a piston (10) of the piston-cylinder unit or of the brake pedal (PB) connected thereto is provided, wherein the actuation of a sensor target (23, 23a) is effected by means of a mechanical actuating mechanism,
and/or
- a sensor device for determining the path of movement of a piston (10) of the piston-cylinder unit or of the brake pedal (PB) connected thereto is provided, wherein at least one sensor target (23) is arranged on the piston (10) and wherein the transmission to the associated sensor element is effected by means of flux conductors (43, 43a, 43b),
and/or
- a sensor device for determining a motor or rotor movement is provided, wherein the actuation of the sensor target (23, 23a) is effected by means of the mechanical actuating mechanism.

4. Actuating device according to claim 3,
**characterized in that**
a gearbox is arranged in a separate housing on or in the motor and a non-positive coupling is provided for the target drive.

5. Actuating device according to one of the preceding claims,
**characterized in that**
- a sensor device for determining the motor or rotor movement is provided, wherein at least one sensor target is arranged on the rotor or an element connected thereto and the transmission to the electronic control and regulation unit (ECU) is effected by means of flux conductors (43, 43b)
and/or
- a sensor device for determining the movement of a level transmitter is provided, wherein the sensor target (23) is arranged on a movable part of the level transmitter and that
the transmission from the sensor target (23) to the sensor element is effected by means of flux conductors (53, 43a, 43b).

6. Actuating device according to one of the preceding claims,
**characterized in that**
- the distance between the sensor target or the flux conductors and the sensor element is less than 5 mm
and/or
- at least one of the sensor elements is a Hall element.

7. Actuating device according to one of the preceding claims,
**characterized in that**
the actuation of at least one sensor target is effected via a toothed drive (9, 9a).

8. Actuating device according to one of the preceding claims,
**characterized in that**
- an actuating or longitudinal axis of the piston-cylinder unit extends substantially perpendicular to an actuating or longitudinal axis of the pressure supply device (11),
and/or
- the pressure fluid reservoir (VB) is mounted on the side adjacent to the first housing unit (GH1) and the second housing unit (GH2) as well as the electronic control unit (ECU).

9. Actuating device according to one of the preceding claims,
**characterized in that**
- at least one sensor actuating device is partially arranged in or guided through the first (GH1) and/or second housing unit (GH2) and/or the motor housing
and/or
- redundant pedal travel sensors are actuated by means of toothed racks (26, 26a) which are coupled to the brake pedal (PB).

10. Actuating device according to one of the preceding claims,
**characterized in that**
at least one sensor actuating device comprises a device
- for converting a translatory movement into a rotatory movement and/or
- for changing the direction of movement.

11. Actuating device according to claim 10,
**characterized in that**
a translatory movement is detected in the sensor actuating device, which is converted into a rotatory movement of the sensor target, wherein the sensor target is designed as an N/S permanent magnet.

12. Actuating device according to one of the preceding claims,
**characterized in that**
the motor housing has an extension (7) for collecting leakage liquid, wherein a sensor (8) for sensing the leakage liquid is provided in the extension.

## Revendications

1. Mécanisme d'actionnement pour un frein de véhicule à moteur, comprenant les composants suivants :
- un dispositif d'actionnement, à savoir une pédale de frein (PB),
- un dispositif de fourniture de pression (11) entraîné par un entraînement à moteur électrique (M),
- un vérin pouvant être actionné au moyen du dispositif d'actionnement, qui est en communication hydraulique avec un réservoir de fluide sous pression (VB) et qui forme les au moins deux espaces sous pression qui communiquent avec les circuits de freinage hydrauliques,
- une disposition de soupapes (HCU) avec des soupapes destinées à régler individuellement les pressions de freinage pour chaque roue et à séparer ou faire communiquer les freins de roue avec le dispositif de fourniture de pression (11) et le vérin,
- une unité de commande et de régulation électronique (ECU) et
- au moins un dispositif de capteurs avec au moins un élément de capteur (3, 4, 5, 24, 24a) et une cible de capteur (5a, 23, 23a) pour capter un mouvement d'un composant du mécanisme,
dans lequel l'au moins un élément de capteur (3, 4, 5, 24, 24a) du dispositif de capteurs est disposé dans l'unité de commande et de régulation électronique (ECU) ou communique avec celle-ci et dans lequel un mouvement du composant du mécanisme (10 ; 45 ; 46 ; 48) est transmis via un dispositif d'actionnement à l'unité de commande et de régulation électronique (25),
**caractérisé en ce que** le mouvement du composant du mécanisme (10; 45; 46; 48) est transmis à l'élément de capteur correspondant par des éléments de conduite d'écoulement (43, 43a, 43b).

2. Mécanisme d'actionnement selon la revendication 1, **caractérisé en ce que**
- les élément de capteur (3, 4, 5, 24, 24a) d'au moins un dispositif de capteurs ou d'un groupe de dispositifs de capteurs sont disposés sur une carte de circuits de système (25) disposée sur l'unité de commande et de régulation électronique (ECU) et/ou
- les éléments de capteur du dispositif de capteurs concernant la fonction dynamique dont la fiabilité et l'exactitude sont critiques, au minimum, sont disposés dans l'unité de commande électronique (ECU).

3. Mécanisme d'actionnement selon l'une des revendications précédentes, **caractérisé en ce que**
- il est prévu un dispositif de capteurs pour déterminer la course de déplacement d'un piston (10) du vérin ou de la pédale de frein (PB) qui lui est reliée, l'actionnement d'une cible de capteur (23, 23a) étant effectué au moyen d'un mécanisme d'actionnement mécanique
et/ou
- un dispositif de capteurs pour déterminer la course de déplacement d'un piston (10) du vérin ou de la pédale de frein (PB) qui lui est reliée, au moins une cible de capteur (23) étant disposée sur le piston (10) et la transmission à l'élément de capteur correspondant passant par des éléments de conduite d'écoulement (43, 43a, 43b)
et/ou
- il est prévu un dispositif de capteurs pour la détermination d'un mouvement du moteur ou du rotor, l'actionnement de la cible de capteur (23, 23a) étant effectué au moyen du mécanisme d'actionnement mécanique.

4. Mécanisme d'actionnement selon la revendication 3, **caractérisé en ce qu'**une transmission est disposée dans un logement séparé sur ou dans le moteur et un accouplement par friction avec l'entraînement cible est prévu.

5. Mécanisme d'actionnement selon l'une des revendications précédentes, **caractérisé en ce que**
- il est prévu un dispositif de capteurs pour déterminer le mouvement du moteur ou du rotor, dans lequel au moins une cible de capteur est disposée sur le rotor ou un élément relié à celui-ci
- et la transmission à l'unité de commande et de régulation électronique (ECU) passe par des éléments de conduite d'écoulement (43, 43b)
et/ou
- il est prévu un dispositif de capteurs pour déterminer le mouvement d'un capteur de niveau, dans lequel la cible de capteur (23) est disposée sur une partie mobile du capteur de niveau
et **en ce que** la transmission de la cible de capteur (23) à l'élément de capteur s'effectue au moyen d'éléments de conduite d'écoulement (53, 43a, 43b).

6. Mécanisme d'actionnement selon l'une des revendications précédentes, **caractérisé en ce que**
- la distance entre la cible de capteur ou les éléments d'écoulement et l'élément de capteur est inférieure à 5 mm
et/ou
- au moins un des éléments de capteur est un élément à effet Hall.

7. Mécanisme d'actionnement selon l'une des revendications précédentes, **caractérisé en ce que** l'actionnement d'au moins une cible de capteur est effectué à l'aide d'une denture (9, 9a).

8. Mécanisme d'actionnement selon l'une des revendications précédentes, **caractérisé en ce que**
- un axe d'actionnement ou axe longitudinal du vérin est sensiblement perpendiculaire à un axe d'actionnement ou axe longitudinal du dispositif de fourniture de pression (11) et/ou
- le réservoir de fluide sous pression (VB) est placé latéralement à côté de la première unité de logement (GH1) et de la deuxième unité de logement (GH2) ainsi que de l'unité de régulation électronique (ECU).

9. Mécanisme d'actionnement selon l'une des revendications précédentes, **caractérisé en ce que**
- au moins un dispositif d'actionnement de capteur est en partie disposé dans la première unité de logement (GH1) et/ou la deuxième (GH2) et/ou le logement du moteur ou passé à travers ceux-ci
et/ou
- des capteurs de course de pédale redondants sont actionnés au moyen de crémaillères (26, 26a) qui sont couplées à la pédale de frein (PB).

10. Mécanisme d'actionnement selon l'une des revendications précédentes, **caractérisé en ce qu'**au moins un dispositif d'actionnement de capteur comprend un dispositif
- pour convertir un mouvement de translation en mouvement de rotation et/ou
- pour changer le sens de mouvement.

11. Mécanisme d'actionnement selon la revendication 10, **caractérisé en ce qu'**un mouvement de translation est capté avec le dispositif d'actionnement de capteur et transformé en mouvement de rotation de la cible de capteur, laquelle cible de capteur est conçue comme un aimant permanent N/S.

12. Mécanisme d'actionnement selon l'une des revendications précédentes, **caractérisé en ce que** le logement de moteur présente un élargissement (7) pour recueillir du liquide de fuites, un capteur (8) pour détecter le liquide de fuite étant prévu dans l'élargissement.
